# EUROPEAN PATENT SPECIFICATION

(11) **EP 4 349 665 B1**
(45) Date of publication and mention of the grant of the patent: **03.12.2025**
(21) Application number: 22200285.9
(22) Date of filing: 07.10.2022
(51) Int. Cl.: B60R 22/12

(54) **SAFETY BELT DEVICE AND MOTOR VEHICLE**
SICHERHEITSGURTEINRICHTUNG UND KRAFTFAHRZEUG
DISPOSITIF DE CEINTURE DE SÉCURITÉ ET VÉHICULE AUTOMOBILE

(43) Date of publication of application: 10.04.2024
(73) Proprietor: Autoliv Development AB, 447 83 Vårgårda (SE)
(72) Inventor: Atwadkar, Abhijeet, 562 114 Bangalore (IN); Swain, Abhijit, 562 114 Bangalore (IN); Shetty, Rakshith, 562 114 Bangalore (IN)
(74) Representative: Müller Verweyen

(56) References cited:
- WO-A1-2022/072656
- DE-A1- 102013 008 059
- DE-A1- 102016 011 480
- DE-A1- 102018 219 101
- DE-A1- 102020 133 574

## Description

The invention relates to a safety belt device for a motor vehicle comprising a belt buckle with an insertion slot, a belt tongue which is configured to be inserted into the insertion slot of the belt buckle and to be locked in the insertion slot of the belt buckle, and a belt webbing that runs through a bracket of the belt tongue, wherein the belt buckle and the belt tongue are configured to transmit electrical power and/or signals from the belt buckle to the belt tongue. The invention also relates to a corresponding motor vehicle.

In seat belt devices, various electrical or electronic components, such as microphones, can be provided in or on the belt webbing for additional functions. These components must be supplied with electrical power for continuous operation. A connection of a microphone that is located in the seat belt is known, for example, from DE 10 2005 002 865 B3.

DE 10 2020 133 574 A1 discloses the transmission of electrical power and/or signals to a component in or on a belt webbing by means of a belt buckle with an insertion slot and a belt tongue inserted into the insertion slot. Therefore, the belt buckle and the belt tongue are configured to transmit electrical power and/or signals from the belt buckle to the belt tongue.

WO 2022/072656 A1 discloses a safety belt device according to the preamble of claim 1.

Especially motor vehicles that have autonomous driving capabilities provide more opportunities regarding the flexibility of seat layouts in the vehicle. Especially the aspect of passenger comfort is taking on an increasingly important role. Thus, concepts of such vehicles suggest seats with reclining functions, zero gravity reclining seats, sleeping configurations or rotating functions to allow socializing activities of the passengers. Such concepts tend to keep the traditional control elements and switches, which are typically located on instrument panels or doors, away from the occupant. The traditional control elements or switches are typically used to control functions, such as reclining a seat, open and close windows, controlling the air conditioner, operating the music player and/or the infotainment system. Depending on the adjustment, position or orientation of a seat, the switches on the instrument panels or doors can be reached only by causing discomfort for the passenger; this can be the case, for example, if the seat is rotated in the direction of the rear bench seat.

Thus, it is desired to provide an alternative option to control the in-vehicle functions.

Therefore, the problem underlying the present invention is to provide an improved safety belt device with a user input device and a corresponding motor vehicle.

The invention solves this problem with the features of the independent claims.

According to a first aspect of the invention, a safety belt device for a motor vehicle is proposed, comprising a belt buckle with an insertion slot, a belt tongue which is configured to be inserted into the insertion slot of the belt buckle and to be locked in the insertion slot of the belt buckle, and a belt webbing that runs through a bracket of the belt tongue, wherein the belt buckle and the belt tongue are configured to transmit electrical power from the belt buckle to the belt tongue, wherein a user input device comprising a user interface and a data processing unit is attached to the belt webbing, wherein the user input device is electrically connected to the belt tongue, wherein the user interface comprises a touch sensitive input interface and/or a detection unit that is configured to detect gestures of a user.

First, some terms used in the context of this application will be explained here.

A touch sensitive input interface may be any kind of input interface that is operable by a touch of a user. A touch sensitive input interface may be a capacitive touch panel, a resistive touch panel or a switch.

A detection unit that is configured to detect gestures of a user may be any kind of detection unit that can detect gestures, in particular gestures made by a hand of the user. A detection unit may be, for example, a camera or an ultrasonic sensor array. For example, the images recorded by a camera can comprise gestures. The extraction of the gestures, for example, by means of image processing may not necessarily be executed by the detection unit. The extraction of gestures may also be performed by the data processing unit or by another device which is not part of the safety belt device.

The invention allows the user to use his hand to execute an input command. This is convenient, because the user can use his hand in a natural way in front of his body independently from the position of the seat in a vehicle, e.g., in a car. Furthermore, due to the fact that the user interface is located on or in the belt webbing, it is ergonomically reachable by the user independently from the position, configuration and/or orientation of the corresponding seat and independently from the seat layout in the vehicle. The input interface located in or on the belt webbing is always close to the passenger and therefore reachable in a comfortable way. This is particularly advantageous for vehicle concepts that consider autonomous driving modes. The user interface of the belt webbing can be used as a remote control to control different functions of functional units that are connected to the vehicle.

Due to the feature of the belt buckle and the belt tongue to transmit electrical power, the user input device can be reliably supplied with electrical power via the belt buckle and belt tongue. Additionally, also signals may be transmitted from and/or to the user input device via the belt buckle and the belt tongue.

Preferably, the output signal comprises a digital data set with control parameters. This data set can be used to control functions of a functional unit of the vehicle or a personal functional unit, for example, a mobile phone that is connected to the vehicle.

The user input device may comprise a flexible carrier, preferably a flexible printed circuit board, to carry further components of the user input device, for example, the data processing unit and/or the user interface. The flexible carrier allows a flexible design of the user input device, which is important for the integration of the user input device in or on the belt webbing.

Preferably, the data processing unit features a system on a chip (SoC) architecture.

Preferably, the user interface comprises a touch sensitive surface, wherein the user interface is configured to detect a position and/or an intensity of a force applied by a user on the touch sensitive surface. Touch sensitive surfaces can be designed as thin and flexible layers; therefore, they are perfectly qualified for an application in or on a belt webbing. Thus, the properties of the belt webbing during handling, for example, when the belt is fastened, and in the event of a crash remain unchanged. Furthermore, a touch sensitive surface can be intuitively used by a user, for example, by executing on the touch sensitive surface a single tap, a double tap, a triple tap, a swipe movement and/or by holding a tap for a certain time period. The different commands can be used, for example, to control various in vehicle functions.

Preferably, the user interface is a force sensitive linear potentiometer. A force sensitive linear potentiometer offers the possibility to enter a variety of different input commands at a relatively small size of the user interface. Furthermore, a force sensitive linear potentiometer is a reliable user interface with a high degree of usability.

According to the invention, the data processing unit is configured to generate an output signal based upon a command of a user, inputted via the user interface. The output signal may be transmitted to a receiving unit. In this way, the output signal form the seat belt device can be transmitted to a corresponding device of the vehicle that is connected to the receiving unit.

Preferably, the user input device comprises a wireless transmission unit that is configured to wirelessly transmit the output signal generated by the data processing unit to be received by the receiving unit. The output signal is preferably transmitted via a Bluetooth standard.

Preferably, the belt webbing comprises a tubular section extending in the longitudinal direction of the belt webbing and/or comprises a pocket, wherein the user input device is at least partially arranged in a cavity formed by the tubular section and/or formed by the pocket, wherein the user interface is covered by the belt webbing. This allows to at least partially integrate the user input device into the belt webbing.

Preferably, at least one haptically perceptible element is provided that is arranged in such a way that the location of the user interface is haptically detectable by a user. This feature is associated with the technical effect that the user interface can be localized purely haptically by a user. This ensures that a user can operate the user interface in a touch and feel manner. Thus, the user input device can be used during low-light and no-light conditions and even if the user is visually impaired.

The at least one haptically perceptible element may be located on a surface of the belt webbing, for example, on an outer surface of the belt webbing. Preferably, the user interface is covered by the belt webbing and the at least one haptically perceptible element is located on an outer surface of the belt webbing, wherein the user interface is located on an inner surface of the belt webbing opposite of the haptically perceptible element. In a preferred embodiment, the haptically perceptible element is applied to the belt webbing by printing; therefore, the haptically perceptible element is preferably a haptic print.

According to the invention, the data processing unit comprises a data storage with a plurality of different types of predefined commands stored thereupon, wherein the data processing unit is configured to detect whether a command of a user inputted via the user interface corresponds to one of the stored predefined commands. This feature has the effect that the data processing unit is enabled to distinguish between conscious and unconscious inputs. This is an important aspect to increase the usability and acceptance of the suggested user input device. The data processing unit may also be configured to generate a corresponding output signal only in the event that the input command is a predefined command stored upon the data storage.

Preferably, the user input device comprises an output device that is configured to generate acoustic and/or haptic output that is recognizable by a user, wherein an acoustic and /or haptic output is generated if the inputted command is one of the predefined commands stored on the data storage. This ensures that the user receives feedback if a predefined command is detected; thus, the usability especially in low light and no light conditions can be increased. In a further preferred embodiment, the output device is configured to generate different outputs that are distinguishable by the user. This allows the user to identify whether the desired input command has been detected by the data processing unit. The output device may comprise a loudspeaker; thus, a beep or a voice from a virtual assistant can, for example, be used as an output.

Additionally or alternatively, the output device may comprise an actuation element configured to generate haptic feedback, for example, vibrations.

According to a second aspect of the invention, a motor vehicle is proposed, comprising a safety belt device as described above, and a control unit that is not part of the safety belt device, wherein the control unit comprises a receiving unit that is configured to receive the output signal transmitted by the safety belt device. The control unit may be an individual control unit that is part of a functional unit. Alternatively, the control unit may be a centralized control unit, for example, an electronic vehicle control unit, that is configured to control a plurality of functional units.

Regarding the technical effects and benefits associated with the suggested motor vehicle, reference is made to the preceding explanation in the context of the safety belt device.

Preferably, the control unit is configured to control at least one functional unit connected to the control unit based upon the output signal generated by the user input device and received by the receiving unit. Thus, the connected functional unit(s) can be remotely controlled by the user interface of the safety belt device in the following manner: The user inputs a command via the user interface. Firstly, the data processing unit identifies the command of the user as one of the predefined commands stored on the data storage and generates a corresponding output signal. Secondly, the output signal is preferably transmitted wirelessly using a Bluetooth standard form the wireless transmission unit of the user input device to the receiving unit as part of the control unit. Thirdly, the output signal is processed by the control unit which is configured to process the output signal in such a manner that the connected functional unit(s) can be controlled. The functional unit(s) may be units that are permanently integrated in the motor vehicle, such as an air conditioner, a music player, a seat adjuster and/or an electrically powered window lift. The functional unit(s) may also be devices that are temporarily connected to the control unit, such as mobile phones or other personal devices.

The user interface may also be used to de-latch the belt tongue in specific conditions. In order to identify such a condition, signals of vehicle sensors may be used. The condition for de-latching can be fulfilled, for example, if the motor vehicle is in a parking area and the car is not moving.

The disclosure of this application is also intended to explicitly include a method for controlling a functional unit which is carried out using the safety belt device or the motor vehicle as described above.

In the following, the invention shall be illustrated on the basis of preferred embodiments with reference to the accompanying drawings, wherein:
- Fig. 1: shows a safety belt device with a user input device according to a first embodiment;
- Fig. 2: shows a belt webbing with a user input device according to a first embodiment;
- Fig. 3: shows a motor vehicle and a safety belt device with a user input device according to a first embodiment;
- Fig. 4: shows a schematic illustration of the functionality of the safety belt device with a user input device according to a first embodiment; and
- Fig. 5: shows a belt webbing with a user input device according to a second embodiment.

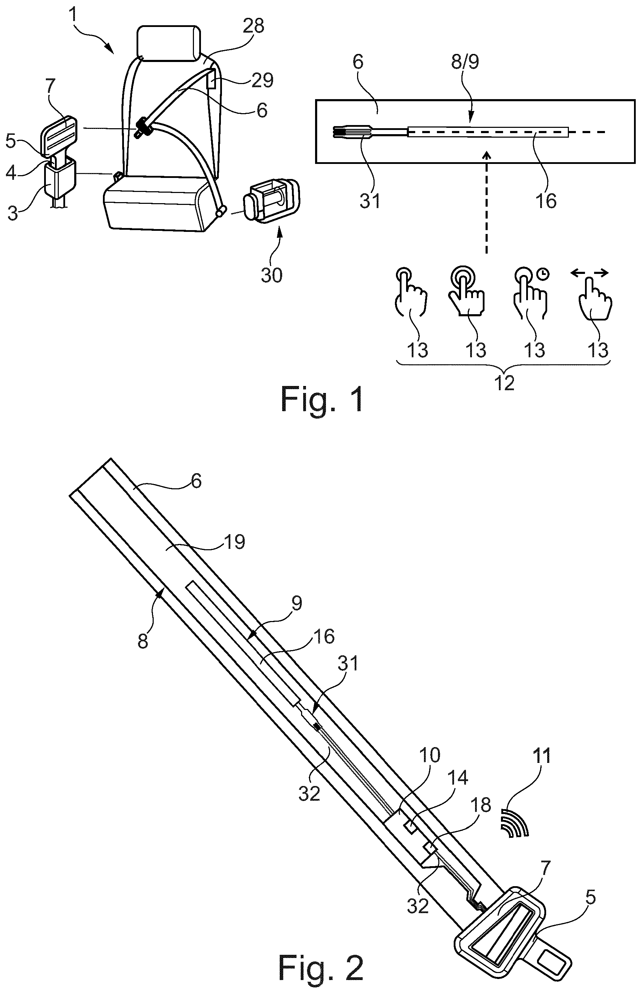

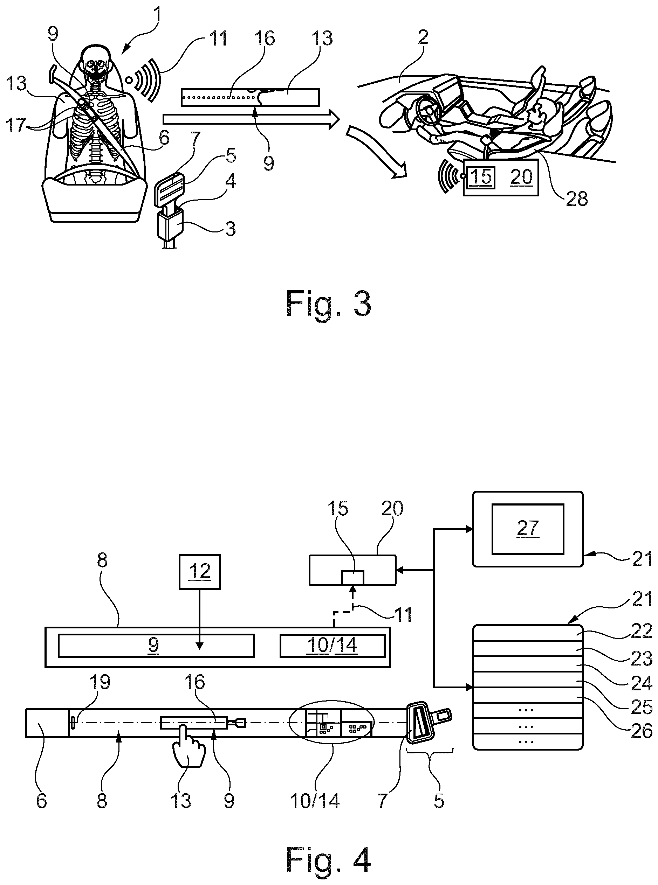

Figure 1 shows a safety belt device 1 for a seat 28 of a motor vehicle 2 (cf. figure 3).

The safety belt device 1 comprises a belt webbing 6 that is mounted on a bracket 7 of a belt tongue 5 and a user input device 8. Furthermore, the safety belt device 1 comprises a belt buckle 3 with an insertion slot 4. The belt tongue 5 can be inserted and locked in the insertion slot 4. In order to energize the user input device 8, the belt buckle 3 and the belt tongue 5 are configured to transmit electrical energy from the belt buckle 3 to the belt tongue 7. Solutions for transmitting electrical power from the belt buckle 3 to the belt tongue 5 are already known. The electrical power can, for example, be transmitted inductively from the belt buckle 3 to the belt tongue 5 as it is disclosed in DE 10 2020 133 574 A1. To allow the transmission of electrical power from the belt tongue 5 to the user input device 8, the belt tongue 5 is preferably attached to the belt webbing 6 in a non-relocatable manner.

The belt webbing 6 is attached to a back rest of the seat 28 or to a not shown vehicle structure by a first retractor 29 that comprises a pretensioner. In the lap area, the belt webbing 6 is also attached to the seat 28 or to the not shown vehicle structure by a second retractor 30 that also comprises a pretensioner. The two retractors 29 and 30 can be actuated independently from each other so that the belt webbing 6 can rest against the occupant without belt slacks despite the belt tongue being attached to the belt webbing 6 in a non-relocatable manner; furthermore, the belt webbing 6 can be rolled up by the retractors 29 and 30 if the belt tongue 5 is unfastened. This ensures that the user input device 8 is not rolled up on one of the retractors 29 or 30, which could lead to damages of the user input device 8 or the belt webbing 6.

Figure 1 also shows an enlarged view of the belt webbing 6 with a user input device 8 attached to it. In this embodiment, the belt webbing 6 is a tubular webbing surrounding the user input device 8. However, in this view, one layer of the belt webbing 6 is removed to make the user input device 8 visible. Figure 1 shows a plug connector 31 connected to the user input device 8. The plug connector 31 is also connected to traces 32 on the carrier 19 that further connect with the data processing unit 10. These traces 32 also connect with the belt tongue 5 which receives electrical power from the belt buckle 3, see also Figure 2. Furthermore, the user input device 8 comprises a user interface 9 with a touch sensitive surface 16. The user interface 9 according to this embodiment is a force sensitive linear potentiometer which is configured to detect the position and the intensity of a force applied on the touch sensitive surface 16. Furthermore, Figure 1 shows a schematic representation of possible input commands 12 that can be entered by a user 13 by using the user interface 9, namely a single tap, a double tap, holding a tap for a certain period of time and swiping. It is obvious for the skilled person that the illustrated list is not complete. However, in practice, the user 13 will not input the commands 12 directly on the touch sensitive surface, since, due to the tubular design of the belt webbing 6, it is covered by a layer of the belt webbing 6. Due to force sensitivity of the user interface 9, it still works if the commands 12 are executed on the belt webbing 6 in an area that transfers the forces of the commands 12 from the belt webbing 6 to the user interface 9.

Figure 2 shows the seat belt webbing 6 with the user input device 8 in its full dimension. A carrier 19 in the form of a flexible printed circuit board is used to carry further components of the user input device 8, namely the user interface 9, a data processing unit 10, a wireless transmission unit 18 and an output device 14. The user input device 8 is electrically powered and automatically set to an operational mode as soon as the belt tongue 5 is inserted in the insertion slot 4 of the belt buckle 3 (cf. Figure 1).

Based upon the input commands 12 of a user 13 (cf. Figure 1), the user interface 9 generates signals that are transmitted by a wired connection to the data processing unit 10. The data processing unit 10 comprises a data storage that stores a plurality of predefined input commands 12. The data processing unit 10 is configured to detect whether a command of the user 13 inputted via the user interface 9 corresponds to one of the stored predefined commands. In this case, the data processing unit 10 generates an output signal 11 that is outputted by the wireless transmission unit 14 using a Bluetooth standard. Furthermore, the data processing unit 10 is configured to activate the output device 18, for example, a loudspeaker or an actuation element that generates vibrations, if a corresponding command 12 is detected. This enables the user 13 to recognize whether a command 12 has been successfully inputted or not.

Alternatively, it is also possible that the data processing unit 10 outputs the raw data received by the user interface 9. Of course, the processing of the raw data then has to be performed by a further processing unit that is not shown in Figure 2.

On the right-hand side of Figure 3, a motor vehicle 2 with four seats 28 is illustrated, wherein the user 13 is sitting on one of the seats 28; i.e., the user 13 is an occupant. A front view of the user 13 sitting on the seat 28 is illustrated on the left-hand side of Figure 3. The safety belt system 1 used in the embodiment of Figure 3 is the one illustrated in Figures 1 and 2. The belt webbing 6 is in the fastened position, so that the user input device 9 is located in the area of the chest of the user 13. This position of the user interface 9 allows an ergonomic usage of the input interface 9 for the user 13. To ensure a corresponding comparability, the height of the user 13 of 1.80 meters, for example, is also specified here.

Furthermore, Figure 3 illustrates two haptically perceptible elements 17 that are printed on the outer surface of the belt webbing 6. They allow the user to haptically locate the area, where the user interface 9 is located underneath a layer of the belt webbing 6. The output signal 11 generated by the data processing unit 10 based on an input 12 (cf. Figure 1) of the user 13 is wirelessly transmitted to a receiving unit 15 which is permanently installed in the motor vehicle 2; the receiving unit 15 is not part of the safety belt device 1. The receiving unit 15 is part of a control unit 20.

Figure 4 shows that the electronic vehicle control unit 20 is configured to control several functional units 21, namely an air conditioner 22, a music player 23, a mobile phone 24, a seat adjuster 25, an electrically powered window lift 26 and an infotainment system 27 of the vehicle 2. Depending on a command 12 inputted by the user interface 9, the data processing unit 10 generates an output signal 11 that is transmitted from the wireless transmission unit 14 of the user input device 8 to a receiving unit 15 using a Bluetooth standard. The receiving unit 15 is part of the control unit 20, which in turn is connected to the functional units 21. In this embodiment, the control unit 20 is a centralized control unit 20, namely an electronic vehicle control unit, that is configured to control a plurality of functional units 21. Additionally or alternatively, one or more functional units 21 could also comprise individual control units 20 with an individual receiving unit 15.

The following are examples of how the functional units can be controlled by using the user interface 9: An incoming call on the mobile phone 24 can be accepted, muted or rejected; the volume of the music player 23 can be increased or decreased; the temperature and/or the fan speed of the air conditioner 22 can be increased or decreased; a voice controlled assistant (not shown) can be activated or deactivated; a seat adjuster 25 can be set to recline mode, super recline mode or rotation mode. Of course, these are only some examples of possible applications.

The control unit 20 is configured to associate the output signal 11 received by the receiving unit 15 with corresponding control functions to control the functional units 21. However, the association of output signals 11 to control functions can be prestored or predefined on the control unit 20. However, it is also possible to manually define input commands 12 and associate them to control functions according to the personal preferences of the user 13.

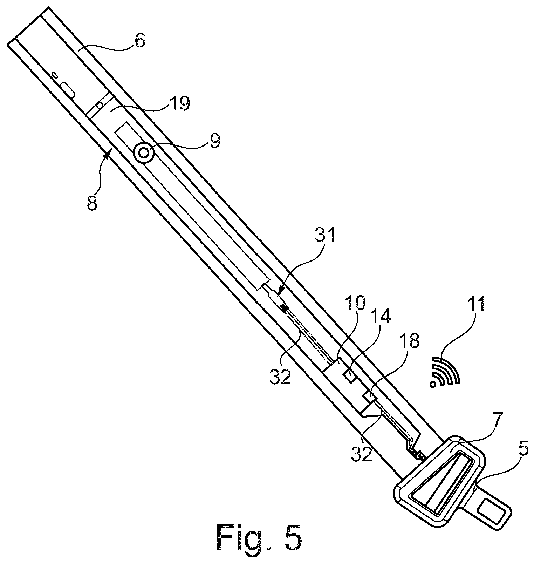

Figure 5 shows a second embodiment of the user input device 8. The basic design of the user input device 8 according to the second embodiment is identical to the design according to the first embodiment so that reference can be made to the preceding descriptions regarding the first embodiment. Only the differences between the two embodiments will be described in the following.

In the embodiment shown in Figure 5, the user interface 9 is a detection unit that is configured to detect gestures of a user. In this case, the detection unit comprises a camera. The gestures of the user 13, particularly gestures created by the hand of the user 13, can be recorded by the camera. An image data processing unit or software may be part of the detection unit itself, part of the data processing unit 10 or part of the control unit 20. The image data processing unit is configured to extract gestures from the images recorded by the camera. Thus, the functional units 21 can be controlled depending on gestures detected by the user interface 9.

Of course, also alternative technologies, for example, based on microwaves, can be considered to detect gestures.

Regardless of whether the user 13 inputs his command by means of a gesture by using the user interface 9 according to the second embodiment (cf. Figure 5) or by means of a touch command by using the user interface 9 according to the first embodiment (cf. Figures 1 to 4), the proposed solution has the advantage of enabling an ergonomic and reliable operation of the functional units 21, regardless of the positioning, orientation or adjustment of the seats 28 in the motor vehicle 2 (cf. Figure 3).

## Claims

1. Safety belt device (1) for a motor vehicle (2), comprising
- a belt buckle (3) with an insertion slot (4),
- a belt tongue (5) which is configured to be inserted into the insertion slot (4) of the belt buckle (3) and to be locked in the insertion slot (4) of the belt buckle (5), and
- a belt webbing (6) that runs through a bracket (7) of the belt tongue (5), wherein
- a user input device (8) comprising a user interface (9) and a data processing unit (10) is attached to the belt webbing (6), wherein
- the user interface (9) comprises a touch sensitive input interface (9) and/or a detection unit that is configured to detect gestures of a user (13), wherein
- the data processing unit (10) is configured to generate an output signal (11) based upon a command (12) of a user (13) inputted via the user interface (9), **characterized in that**
- the belt buckle (3) and the belt tongue (5) are configured to transmit electrical power from the belt buckle (3) to the belt tongue (5), wherein
- the user input device (8) is electrically connected to the belt tongue (5), wherein
- the data processing unit (10) comprises a data storage with a plurality of different types of predefined commands stored thereupon, wherein
- the data processing unit (10) is configured to detect whether a command of a user (13) inputted via the user interface (9) corresponds to one of the stored predefined commands.

2. Safety belt device (1) according to claim 1, wherein
- the user interface (9) comprises a touch sensitive surface (16), wherein
- the user interface (9) is configured to detect a position and/or an intensity of a force applied by a user (13) on the touch sensitive surface (16).

3. Safety belt device (1) according to claim 1 or 2, wherein
- the user interface (9) is a force sensitive linear potentiometer.

4. Safety belt device (1) according to any of the claims 1 to 3, wherein
- the belt webbing (6) comprises a tubular section extending in the longitudinal direction of the belt webbing (6) and/or comprises a pocket, wherein
- the user input device (8) is at least partially arranged in a cavity formed by the tubular section and/or formed by the pocket, wherein
- the user interface (9) is covered by the belt webbing (6).

5. Safety belt device (1) according to any of the claims 1 to 4, wherein
- at least one haptically perceptible element (17) is provided that is arranged in such a way that the location of the user interface (9) is haptically detectable by a user (13).

6. Safety belt device (1) according to claim 5, wherein
- the at least one haptically perceptible element (17) is located on a surface of the belt webbing (6).

7. Safety belt device (1) according to claims 1 to 6, wherein
- the user input device (8) comprises an output device (18) that is configured to generate acoustic and/or haptic output that is recognizable by a user (13), wherein
- an acoustic and /or haptic output is generated if the inputted command is one of the predefined commands stored on the data storage.

8. Motor vehicle (2) comprising
- a safety belt device (1) according to any of the claims 1 to 7, and
- at least one control unit (20) that is not part of the safety belt device (1), wherein
- the at least one control unit (20) comprises a receiving unit (13) that is configured to receive the output signal (11) transmitted by the safety belt device (1).

9. Motor vehicle (2) according to claim 8, wherein
- the control unit (20) is configured to control at least one functional unit (21) connected to the control unit (20) based upon the output signal (11) generated by the user input device (8) and received by the receiving unit (15).

## Patentansprüche

1. Sicherheitsgurtvorrichtung (1) für ein Kraftfahrzeug (2), umfassend
- einer Gurtschnalle (3) mit einem Einsteckschlitz (4),
- eine Gurtzunge (5), die konfiguriert ist, um in den Einsteckschlitz (4) der Gurtschnalle (3) eingesteckt und in dem Einsteckschlitz (4) der Gurtschnalle (5) verriegelt zu werden, und
- ein Gurtband (6), das durch eine Halterung (7) der Gurtzunge (5) verläuft, wobei
- eine Benutzereingabevorrichtung (8), umfassend eine Benutzerschnittstelle (9) und eine Datenverarbeitungseinheit (10), die an dem Gurtband (6) angebracht ist, wobei
- die Benutzerschnittstelle (9) eine berührungsempfindliche Eingabeschnittstelle (9) und/oder eine Erfassungseinheit umfasst, die konfiguriert ist, um Gesten eines Benutzers (13) zu erfassen, wobei
- die Datenverarbeitungseinheit (10) konfiguriert ist, um basierend auf einem Befehl (12) eines Benutzers (13), der über die Benutzerschnittstelle (9) eingegeben wird, ein Ausgabesignal (11) zu erzeugen,
**dadurch gekennzeichnet, dass**
- die Gurtschnalle (3) und die Gurtzunge (5) konfiguriert sind, um elektrische Leistung von der Gurtschnalle (3) zu der Gurtzunge (5) zu übertragen, wobei
- die Benutzereingabevorrichtung (8) elektrisch mit der Gurtzunge (5) verbunden ist, wobei
- die Datenverarbeitungseinheit (10) einen Datenspeicher mit einer Vielzahl unterschiedlicher Typen von vordefinierten Befehlen umfasst, wobei
- die Datenverarbeitungseinheit (10) konfiguriert ist, um zu erfassen, ob ein Befehl eines Benutzers (13), der über die Benutzerschnittstelle (9) eingegeben wird, einem der gespeicherten vordefinierten Befehle entspricht.

2. Sicherheitsgurtvorrichtung (1) nach Anspruch 1, wobei
- die Benutzerschnittstelle (9) eine berührungsempfindliche Oberfläche (16) umfasst, wobei
- die Benutzerschnittstelle (9) konfiguriert ist, um eine Position und/oder eine Intensität einer Kraft zu erfassen, die durch einen Benutzer (13) auf die berührungsempfindliche Oberfläche (16) ausgeübt wird.

3. Sicherheitsgurtvorrichtung (1) nach Anspruch 1 oder 2, wobei
- die Benutzerschnittstelle (9) ein kraftempfindliches lineares Potentiometer ist.

4. Sicherheitsgurtvorrichtung (1) nach einem der Ansprüche 1 bis 3, wobei
- das Gurtband (6) einen röhrenförmigen Abschnitt umfasst, der sich in der Längsrichtung des Gurtbandes (6) erstreckt, und/oder eine Tasche umfasst, wobei
- die Benutzereingabevorrichtung (8) mindestens teilweise in einem Hohlraum angeordnet ist, der durch den röhrenförmigen Abschnitt und/oder durch die Tasche ausgebildet wird, wobei
- die Benutzerschnittstelle (9) durch das Gurtband (6) abgedeckt wird.

5. Sicherheitsgurtvorrichtung (1) nach einem der Ansprüche 1 bis 4, wobei
- mindestens ein haptisch wahrnehmbares Element (17) bereitgestellt ist, das auf solche Weise angeordnet ist, dass die Lage der Benutzerschnittstelle (9) durch einen Benutzer (13) haptisch erfassbar ist.

6. Sicherheitsgurtvorrichtung (1) nach Anspruch 5, wobei
- sich das mindestens eine haptisch wahrnehmbare Element (17) auf einer Oberfläche des Gurtbandes (6) befindet.

7. Sicherheitsgurtvorrichtung (1) nach den Ansprüchen 1 bis 6, wobei - die Benutzereingabevorrichtung (8) eine Ausgabevorrichtung (18) umfasst, die konfiguriert ist, um eine durch einen Benutzer (13) erkennbare akustische und/oder haptische Ausgabe zu erzeugen, wobei
- eine akustische und/oder haptische Ausgabe erzeugt wird, falls der eingegebene Befehl einer der vordefinierten Befehle ist, die auf dem Datenspeicher gespeichert sind.

8. Kraftfahrzeug (2) umfassend
- eine Sicherheitsgurtvorrichtung (1) nach einem der Ansprüche 1 bis 7, und
- mindestens eine Steuereinheit (20), die nicht Teil der Sicherheitsgurtvorrichtung (1) ist, wobei
- die mindestens eine Steuereinheit (20) eine Empfangseinheit (13) umfasst, die konfiguriert ist, um das Ausgangssignal (11) zu empfangen, das durch die Sicherheitsgurtvorrichtung (1) übertragen wird.

9. Kraftfahrzeug (2) nach Anspruch 8, wobei
- die Steuereinheit (20) konfiguriert ist, um mindestens eine Funktionseinheit (21), die mit der Steuereinheit (20) verbunden ist, basierend auf dem Ausgangssignal (11) zu steuern, das durch die Benutzereingabevorrichtung (8) erzeugt und durch die Empfangseinheit (15) empfangen wird.

## Revendications

1. Dispositif de ceinture de sécurité (1) pour un véhicule à moteur (2), comprenant
- une boucle de ceinture (3) avec une fente d'insertion (4),
- une languette de ceinture (5) qui est conçue pour être insérée dans la fente d'insertion (4) de la boucle de ceinture (3) et pour être verrouillée dans la fente d'insertion (4) de la boucle de ceinture (5), et
- une sangle de ceinture (6) qui passe à travers un support (7) de la languette de ceinture (5), dans lequel
- un dispositif d'entrée utilisateur (8) comprenant une interface utilisateur (9) et une unité de traitement de données (10) est fixé à la sangle de ceinture (6), dans lequel
- l'interface utilisateur (9) comprend une interface d'entrée tactile (9) et/ou une unité de détection configurée pour détecter des gestes d'un utilisateur (13), dans lequel
- l'unité de traitement de données (10) est configurée pour générer un signal de sortie (11) en fonction d'une commande (12) d'un utilisateur (13) entrée par l'intermédiaire de l'interface utilisateur (9), **caractérisé en ce que**
- la boucle de ceinture (3) et la languette de ceinture (5) sont conçues pour transmettre de l'énergie électrique de la boucle de ceinture (3) à la languette de ceinture (5), dans lequel
- le dispositif d'entrée utilisateur (8) est connecté électriquement à la languette de ceinture (5), dans lequel
- l'unité de traitement de données (10) comprend un stockage de données dans lequel sont stockés une pluralité de types différents de commandes prédéfinies, dans lequel
- l'unité de traitement de données (10) est configurée pour détecter si une commande d'un utilisateur (13) entrée par l'intermédiaire de l'interface utilisateur (9) correspond à l'une des commandes prédéfinies stockées.

2. Dispositif de ceinture de sécurité (1) selon la revendication 1, dans lequel
- l'interface utilisateur (9) comprend une surface tactile (16), dans lequel
- l'interface utilisateur (9) est configurée pour détecter une position et/ou une intensité d'une force appliquée par un utilisateur (13) sur la surface tactile (16).

3. Dispositif de ceinture de sécurité (1) selon la revendication 1 ou 2, dans lequel
- l'interface utilisateur (9) est un potentiomètre linéaire sensible à la force.

4. Dispositif de ceinture de sécurité (1) selon l'une quelconque des revendications 1 à 3, dans lequel
- la sangle de ceinture (6) comprend une section tubulaire s'étendant dans la direction longitudinale de la sangle de ceinture (6) et/ou comprend une poche, dans lequel
- le dispositif d'entrée utilisateur (8) est au moins partiellement disposé dans une cavité formée par la section tubulaire et/ou formée par la poche, dans lequel
- l'interface utilisateur (9) est recouverte par la sangle de ceinture (6).

5. Dispositif de ceinture de sécurité (1) selon l'une quelconque des revendications 1 à 4, dans lequel
- au moins un élément haptiquement perceptible (17) est prévu et disposé de telle manière que l'emplacement de l'interface utilisateur (9) puisse être détecté haptiquement par un utilisateur (13).

6. Dispositif de ceinture de sécurité (1) selon la revendication 5, dans lequel
- l'au moins un élément haptiquement perceptible (17) est situé sur une surface de la sangle de ceinture (6).

7. Dispositif de ceinture de sécurité (1) selon les revendications 1 à 6, dans lequel
- le dispositif d'entrée utilisateur (8) comprend un dispositif de sortie (18) qui est configuré pour générer une sortie acoustique et/ou haptique reconnaissable par un utilisateur (13), dans lequel
- une sortie acoustique et/ou haptique est générée si la commande entrée est l'une des commandes prédéfinies stockées dans le stockage de données.

8. Véhicule à moteur (2) comprenant
- un dispositif de ceinture de sécurité (1) selon l'une quelconque des revendications 1 à 7, et
- au moins une unité de commande (20) qui ne fait pas partie du dispositif de ceinture de sécurité (1), dans lequel
- l'au moins une unité de commande (20) comprend une unité de réception (13) qui est configurée pour recevoir le signal de sortie (11) transmis par le dispositif de ceinture de sécurité (1).

9. Véhicule à moteur (2) selon la revendication 8, dans lequel
- l'unité de commande (20) est configurée pour commander au moins une unité fonctionnelle (21) connectée à l'unité de commande (20) en fonction du signal de sortie (11) généré par le dispositif d'entrée utilisateur (8) et reçu par l'unité de réception (15).
